# EUROPÄISCHE PATENTSCHRIFT

(11) **EP 3 922 903 B1**
(45) Veröffentlichungstag und Bekanntmachung des Hinweises auf die Patenterteilung: **09.10.2024**
(21) Anmeldenummer: 21174796.9
(22) Anmeldetag: 19.05.2021
(51) Int. Cl.: F17C 13/02

(54) **VERFAHREN ZUR ERMITTLUNG EINER ABGEGEBENEN MENGE AN WASSERSTOFF**
METHOD FOR DETERMINING A DISPENSED AMOUNT OF HYDROGEN
PROCÉDÉ DE DÉTERMINATION D'UNE QUANTITÉ DÉLIVRÉE D'HYDROGÈNE

(30) Priorität: 12.06.2020 DE 102020115640
(43) Veröffentlichungstag der Anmeldung: 15.12.2021
(73) Patentinhaber: Westenergie AG, 45128 Essen (DE)
(72) Erfinder: Herr, Stefan, 40477 Düsseldorf (DE); Kledewski, Ingo, 44319 Dortmund (DE)
(74) Vertreter: Bals & Vogel Patentanwälte PartGmbB

(56) Entgegenhaltungen:
- WO-A1-2017/134407
- WO-A1-2018/054836
- WO-A1-2019/235386
- DE-T5- 112010 003 119
- DE-T5- 112019 002 858
- US-A1- 2017 336 233

## Beschreibung

Die vorliegende Erfindung betrifft ein Verfahren sowie ein System zur Ermittlung einer bei einem Tankvorgang an einer H₂-Tankstelle an ein wasserstoffbetriebenes Fahrzeug abgegebenen Menge an Wasserstoff.

WO2018/054836 A1 offenbart ein solches Verfahren.

Neben der Elektromobilität und der Verwendung von elektrischen Energiespeichern ist Wasserstoff der wohl wichtigste und vielversprechendste Energieträger für eine umweltfreundliche und nachhaltige Mobilität. Fahrzeuge, die mithilfe von Wasserstoff angetrieben werden, müssen - genau wie benzinbetriebene Fahrzeuge mit Benzin - an Tankstellen mit Wasserstoff betankt werden.

Beim Tanken von Wasserstoff besteht aufgrund des verwendeten hohen Drucks und der Eigenschaft von Wasserstoff, durch feste Materialien zu diffundieren, das Problem, eine an ein Fahrzeug abgegebene Menge an Wasserstoff exakt bestimmen zu können. So kann sich nach einem Tankvorgang Wasserstoff aus einem Tank "verflüchtigen" oder während des Tankvorgangs durch den Gasschlauch diffundieren. Der durch den Gasschlauch diffundierte Wasserstoff gilt hierbei als Leitungsverlust, der dem Kunden nicht in Rechnung gestellt werden darf. Da sich die Gaszähler zum Messen der abgegebenen Wasserstoffmenge jedoch in der Zapfsäule einer H₂-Tankstelle befinden, können solche Leitungsverluste mit herkömmlichen Verfahren und Systemen nicht berücksichtigt werden. Um überhaupt sicherstellen zu können, dass die für die Abgabe des Wasserstoffs erhobenen Rechnungsbeträge vertrauenswürdig sind müssen zukünftige H₂-Tankstellen auch eichrechtskonform ausgebildet sein.

Aus der DE 10 2014 018 099 A1 und der WO 2017 134407 A1 sind Systeme zum Betanken mit Wasserstoff bekannt, die die vorbenannten Probleme zumindest teilweise zu lösen versuchen. Jedoch sind die aus diesen Schriften bekannten Lösungsansätze entweder nicht in der Lage, einen Leitungsverlust zu berücksichtigen oder messtechnisch komplex aufgebaut und daher nicht vielversprechend für einen großtechnischen Einsatz.

Es ist daher die Aufgabe der vorliegenden Erfindung, die voranstehend beschriebenen Nachteile zumindest teilweise zu beheben. Insbesondere ist es die Aufgabe der Erfindung, auf konstruktiv einfache Art und Weise ein Verfahren sowie ein System zur Betankung von wasserstoffbetriebenen Fahrzeugen zur Verfügung zu stellen, das eine vertrauenswürdige Abrechnung gewährleistet, die insbesondere die während eines Tankvorgangs erfolgenden Verluste eines Übertragungsweges mitberücksichtigt.

Die voranstehende Aufgabe wird gelöst durch ein Verfahren mit den Merkmalen des Anspruchs 1 sowie durch ein System mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System und umgekehrt, sodass bezüglich der Offenbarungen zu den einzelnen Erfindungsaspekten stets wechselseitig Bezug genommen wird bzw. werden kann.

Erfindungsgemäß ist ein Verfahren zur Ermittlung einer bei einem Tankvorgang an einer H₂-Tankstelle an ein wasserstoffbetriebenes Fahrzeug tatsächlich abgegebenen Menge an Wasserstoff vorgesehen. Hierbei umfasst das erfindungsgemäße Verfahren die Schritte eines Einleitens eines Tankvorgangs des wasserstoffbetriebenen Fahrzeugs mittels eines Steuergerätes der H₂-Tankstelle, eines Erfassens von zumindest einem Messwert zur Bestimmung einer während des Tankvorgangs abgegebenen Menge an Wasserstoff mittels eines an einer ersten Position innerhalb der H₂-Tankstelle angeordneten ersten Sensors sowie eines Erfassens von zumindest einem Messwert zur Bestimmung einer während des Tankvorgangs abgegebenen Menge an Wasserstoff mittels eines weiteren Sensors an einer zweiten, von der ersten verschiedenen Position. Anschließend erfolgt gemäß dem gegenständlichen Verfahren ein Ermitteln der tatsächlich an das wasserstoffbetriebene Fahrzeug abgegebenen Menge an Wasserstoff auf Basis einer Korrelation der mittels des ersten Sensors und der mittels des weiteren Sensors bestimmten Mengen an Wasserstoff, dadurch gekennzeichnet dass das Ermitteln der tatsächlich abgegebenen Menge an Wasserstoff auf Basis einer Korrelation der mittels des ersten Sensors und der mittels des weiteren Sensors bestimmten Mengen an Wasserstoff über die Verwendung einer Nachschlagetabelle erfolgt, wobei die Nachschlagetabelle ein Datentupel aus zumindest einem mittels des ersten Sensors erfassten Messwert und einem mittels des weiteren Sensors erfassten Messwert für eine abgegebene Menge an Wasserstoff umfasst, wobei den mittels des ersten und weiteren Sensors erfassten Messwerten jeweils ein Messwert zugeordnet ist, der die tatsächliche an ein wasserstoffbetriebenes Fahrzeug abgegebene Menge an Wasserstoff angibt.

Das gegenständliche Verfahren kann dabei bei einem Tankvorgang von wasserstoffbetriebenen Kraftfahrzeugen, wie beispielsweise PKWs oder LKWs vorgesehen sein. Ebenso ist allerdings auch eine Überprüfung von Tankvorgängen für Schiffe, Flugobjekte oder auch stationäre Systeme denkbar. Unter einer tatsächlich an ein wasserstoffbetriebenes Fahrzeug abgegebenen Menge an Wasserstoff wird gegenständlich insbesondere die von einer H₂-Tankstelle abgegebene Menge an Wasserstoff abzüglich des Leitungsverlustes und gegebenenfalls abzüglich anderer Verluste verstanden. Der erste Sensor zum Erfassen von zumindest einem Messwert zur Bestimmung einer während des Tankvorgangs abgegebenen Menge an Wasserstoff kann gegenständlich insbesondere in Form eines Gaszählers ausgebildet sein, wie er in üblichen Gasabgabevorrichtungen eingesetzt wird. Der Gaszähler kann in verschiedensten Formen ausgebildet sein, beispielsweise als Balgengaszähler, Drehkolbenzähler, Turbinenradzähler, Ultraschallzähler, Wirbelgaszähler, Corioliszähler oder dergleichen und je nach Ausführungsform über das Erfassen verschiedener Messwerte (beispielsweise eines Drucks, einer Temperatur, eines Gasflusses oder dergleichen) innerhalb eines Messintervalls eine abgegebene Menge an Wasserstoff bestimmen. Ebenso wie über den ersten Sensor, kann auch mit Hilfe des weiteren Sensors über das Erfassen verschiedener Messwerte innerhalb eines Messintervalls eine abgegebene Menge an Wasserstoff bestimmt werden.

Im Rahmen der Erfindung ist erkannt worden, dass durch die erfindungsgemäße Korrelation der mittels eines ersten Sensors und der mittels eines weiteren Sensors bestimmten Mengen an Wasserstoff eine eichrechtskonforme Ermittlung einer bei einem Tankvorgang an einer H₂-Tankstelle an ein wasserstoffbetriebenes Fahrzeug tatsächlich abgegebenen Menge an Wasserstoff gewährleistet ist, die auch Übertragungsverluste bzw. Leitungsverluste berücksichtigt. Eine Eichrechtskonformität soll hierbei insbesondere sicherstellen, dass alle bei der Erhebung von Messwerten und bei der Verarbeitung der Messwerte bis zum Rechnungsbetrag beteiligten Komponenten vertrauenswürdig sind und eine Prüfung der Rechnung ausschließlich auf Basis von vertrauenswürdigen Komponenten möglich ist.

Im Rahmen einer gleichzeitig schnellen, einfachen und automatisierbaren Methode einer an ein wasserstoffbetriebenes Fahrzeug tatsächlich abgegebenen Menge an Wasserstoff wird erfindungsgemäß vorteilhafterweise vorgesehen, dass das Ermitteln der tatsächlich abgegebenen Menge an Wasserstoff auf Basis einer Korrelation der mittels des ersten Sensors und der mittels des weiteren Sensors bestimmten Mengen an Wasserstoff über die Verwendung einer Nachschlagetabelle erfolgt, wobei die Nachschlagetabelle vorzugsweise ein Datentupel aus zumindest einem mittels des ersten Sensors erfassten Messwert und zumindest einem mittels des weiteren Sensors erfassten Messwert für eine abgegebene Menge an Wasserstoff umfasst, wobei den mittels des ersten und weiteren Sensors bestimmten Werten insbesondere jeweils ein Wert zugeordnet ist, der die tatsächliche an ein wasserstoffbetriebenes Fahrzeug abgegebene Menge an Wasserstoff angibt.

Zur Gewährleistung einer zuverlässigen und systembezogenen Ermittlung einer an ein wasserstoffbetriebenes Fahrzeug tatsächlich abgegebenen Menge an Wasserstoff kann gegenständlich ferner vorgesehen sein, dass die Nachschlagetabelle auf Basis einer Kalibrierung bei der Inbetriebnahme und/oder einer Eichung und/oder der Produktion der H₂-Tankstelle erstellt wurde, wobei die Nachschlagetabelle vorzugsweise in einer Komponente der H₂-Tankstelle, insbesondere in dem ersten Sensor oder dem Steuergerät abgespeichert ist.

Um eine genügend große Auswahl an möglichen Korrelationen zu besitzen, ist es vorteilhaft, wenn die Nachschlagetabelle zumindest fünf, vorzugsweise zumindest zehn, insbesondere zumindest 25 verschiedene Datentupel aus zumindest einem mittels des ersten Sensors erfassten Messwert und zumindest einem mittels des weiteren Sensors erfassten Messwert einer abgegebenen Menge an Wasserstoff umfasst, denen jeweils ein Wert zugeordnet ist, der die tatsächlich an ein wasserstoffbetriebenes Fahrzeug abgegebene Menge an Wasserstoff angibt. Hierbei könnte eine Tankmenge für einen Tankvorgang insbesondere an die bestehende Auswahl von Daten angepasst sein, sodass beispielsweise nur bestimmte Einheiten einer Wasserstoffmenge abgefüllt werden können für die auch entsprechende Werte in den Datentypen bekannt sind.

Im Rahmen einer besonders exakten Bestimmung einer an ein wasserstoffbetriebenes Fahrzeug tatsächlich abgegebenen Menge an Wasserstoff kann erfindungsgemäß vorteilhafter Weise ferner vorgesehen sein, dass ein Datentupel der Nachschlagetabelle neben einem mittels des ersten Sensors erfassten Messwert und einem mittels des weiteren Sensors erfassten Messwert einer abgegebenen Menge an Wasserstoff noch zumindest einen weiteren Wert, vorzugsweise mehr als zumindest einen weiteren Wert umfasst, dem jeweils ein Wert zugeordnet ist, der die tatsächlich an ein wasserstoffbetriebenes Fahrzeug abgegebene Menge an Wasserstoff angibt, wobei der zumindest eine weitere Wert ein Druck und/oder eine Temperatur und/oder ein Gasfluss ist. Auf diese Weise kann jedem Datentupel ein tatsächlicher Wert zugeordnet werden, der der tatsächlich übertragenden Wasserstoffmenge entspricht. Wenn die Werte eines Datentupels ermittelt worden sind, kann für eine mögliche Abrechnung der jeweilige, diesem Datentupel zugeordnete tatsächliche Wert verwendet werden. Hierbei sind die einzelnen Daten, beispielsweise ein Wert des ersten Sensors, ein Wert des weiteren Sensors, ein Temperaturwert und ein Druckwert, derart miteinander verknüpft, dass durch diese ein Zustand der H₂-Tankstelle bzw. des Systemaufbaus beschrieben wird. Der weitere Sensor kann dabei beispielsweise auch in Form eines Temperatur- oder Drucksensors oder dergleichen ausgebildet sein und eine Temperatur oder einen Druck erfassen und entsprechend in eine abgegebene Wasserstoffmenge umrechnen.

Im Rahmen einer möglichst fehlerfreien und zuverlässigen Ermittlung einer tatsächlich an ein wasserstoffbetriebenes Fahrzeug abgegebenen Menge an Wasserstoff kann vorteilhafter Weise ferner vorgesehen sein, dass der zumindest eine mittels des ersten Sensors erfasste Messwert und der zumindest eine mittels des weiteren Sensors erfasste Messwert zur Bestimmung einer abgegebenen Menge an Wasserstoff in einem definierten Zeitintervall, vorzugsweise in einem zeitlich synchronisierte Zeitintervall erfasst werden.

Im Rahmen einer möglichst einfachen Einführung einer zeitlichen Synchronisation zwischen den Messwerten des ersten und des weiteren Sensors kann gegenständlich insbesondere vorgesehen sein, dass eine zeitliche Synchronisation zwischen dem ersten und dem weiteren Sensor durch die Implementierung von zeitgestempelten Messwerten und/oder die Einführung einer echtzeitfähigen Kommunikationsverbindung und/oder über die Versendung einer Zeitkorrelationsnachricht erfolgt. Eine Implementierung von zeitgestempelten Messwerten kann hierbei insbesondere derart erfolgen, dass sowohl die Messwerte des ersten Sensors, als auch die Messwerte des weiteren Sensors einen Zeitstempel aufweisen. Die Zeitstempel der Messwerte des ersten Sensors und des zweiten Sensors können vorzugsweise auf einer gemeinsamen Zeitbasis basieren. Im Gegensatz zur Einführung einer echtzeitfähigen Kommunikationsverbindung ist eine Variante mit Zeitstempel deutlich günstiger. Im Rahmen der Verwendung einer Zeitkorrelationsnachricht kann das Steuergerät oder ein als Gaszähler ausgebildeter erster Sensor der gegenständlichen H₂-Tankstelle beispielsweise mit einer Versendung einer speziellen Zeitkorrelationsnachricht einen Messwert des weiteren Sensors anfordern. Wenn der weitere Sensor diese Nachricht empfangen hat, wird ein Interrupt im weiteren Sensor ausgelöst, der dazu führt, dass mit einem aktuell gemessenen Messwert des weiteren Sensors geantwortet wird. Sofern die Latenzzeit der verwendeten Kommunikationsverbindung bekannt ist, kann somit einem Messwert des als Gaszähler ausgebildeten ersten Sensors ein Messwert des weiteren Sensors zugeordnet werden. Das Steuergerät kann beispielsweise auch in einem als Gaszähler ausgebildeten ersten Sensor implementiert sein.

Im Rahmen einer besonders einfach implementierbaren Methode zur Verbesserung der Ermittlung einer abgegebenen Menge an Wasserstoff in Bezug auf Zuverlässigkeit und Fehlerfreiheit kann vorteilhafter Weise ferner vorgesehen sein, dass die von dem weiteren Sensor erfassten Messwerte zur Bestimmung einer abgegebenen Menge an Wasserstoff vor einer Korrelation mit dem zumindest einem vom ersten Sensor erfassten Messwert gemittelt werden, wobei vorzugsweise ein gleitender Mittelwert berechnet wird. Im Rahmen einer solchen Ausführung wäre der genaue Zeitpunkt eines einzelnen Messwerts unwichtig, da "Ausreißer" bei den Messwerten eine geringe Auswirkung auf den gleitenden Mittelwert haben. Diese Möglichkeit lässt sich insbesondere vergleichsweise simpel implementieren, da sie keine exakte zeitliche Synchronisation und kein a priori-Wissen über die verwendete Kommunikationsverbindung (insbesondere über dessen Latenzzeit) erfordert.

Im Hinblick auf eine konstruktiv einfache und unkomplizierte Art und Weise der Gewährleistung einer Kommunikation des weiteren Sensors mit der H₂-Tankstelle ist es ferner denkbar, dass eine Kommunikation des weiteren Sensors mit der H₂-Tankstelle zur Übermittlung der erfassten Messwerte, vorzugsweise mit dem ersten Sensor und/oder dem Steuergerät, über eine Drahtlosnetzwerkverbindung erfolgt, wobei die drahtlose Netzwerkverbindung insbesondere als Bluetooth-Verbindung, WLAN-Verbindung, NFC oder Zigbee implementiert ist. Die Verfahren NFC oder Zigbee bieten sich hierbei insbesondere in Ausführungsformen an, in denen der weitere Sensor nicht weit von dem Steuergerät der H₂-Tankstelle entfernt angeordnet ist. Alternativ kann eine Kommunikation des weiteren Sensors mit der H₂-Tankstelle zur Übermittlung der erfassten Messwerte auch drahtgebunden erfolgen. Im Falle einer drahtgebundenen Kommunikationsverbindung kann diese auch dazu verwendet werden, eine Versorgungsspannung für den weiteren Sensor bereitzustellen, beispielsweise über Power-over-Ethernet-Techniken oder dergleichen.

Ebenfalls Gegenstand der Erfindung ist ferner ein System zur Durchführung eines voranstehend beschriebenen Verfahrens. Hierbei umfasst das gegenständliche System eine H₂-Tankstelle mit einem Wasserstofftank zur Speicherung von Wasserstoff, einer Zapfsäule und einem Gasschlauch zur Überführung von Wasserstoff zu einem Tankventil eines wasserstoffbetriebenen Fahrzeugs, wobei der Gasschlauch ein Zapfventil zur Kopplung des Gasschlauches mit dem Tankventil des wasserstoffbetriebenen Fahrzeugs aufweist. Die Zapfsäule umfasst ferner ein Steuergerät zur Initiierung, Beendigung und Überwachung eines Tankvorgangs und einen ersten Sensor zur Erfassung von zumindest einem Messwert zur Bestimmung einer während eines Tankvorgangs abgegebenen Menge an Wasserstoff. Zudem weist das System einen weiteren, entfernt von dem ersten Sensor angeordneten Sensor zur Erfassung von zumindest einem Messwert zur Bestimmung einer während eines Tankvorgangs abgegebenen Menge an Wasserstoff auf, wobei auf Basis einer Korrelation der mittels des ersten Sensors und der mittels des weiteren Sensors bestimmten Menge an Wasserstoff eine tatsächlich an das wasserstoffbetriebene Fahrzeug abgegebene Menge an Wasserstoff ermittelbar ist. Damit weist das erfindungsgemäße System die gleichen Vorteile auf, wie sie bereits ausführlich in Bezug auf das erfindungsgemäße Verfahren beschrieben worden sind. Im Rahmen einer einfachen, kostengünstigen und effektiven Ausführung des gegenständlichen Systems ist es denkbar, dass der erste Sensor in Form eines Gaszählers ausgebildet ist, wobei der Gaszähler eine Zählereinheit und eine Messeinheit umfasst, wobei die Zählereinheit und die Messeinheit vorzugsweise örtlich getrennt voneinander angeordnet sind. Das Steuergerät der H₂-Tankstelle kann beispielsweise auch in einem als Gaszähler ausgebildeten ersten Sensor implementiert sein.

Im Rahmen einer effektiven und kostengünstigen Ausführung, die zudem konstruktiv einfach implementierbar ist, kann erfindungsgemäß vorteilhafter Weise zudem vorgesehen sein, dass der zweite Sensor in Form eines Durchflussmessers, eines Drucksensors oder eines Temperatursensors gebildet ist. Bei einer Ausführung in Form eines Drucksensors ist der zweite Sensor entsprechend dazu ausgebildet, einen herrschenden Druck zu messen, der beispielsweise von einem H₂-Fluss stammen kann, der aktuell durch das Zapfventil fließt. Ein Durchflussmesser kann entsprechend die Durchflussmenge von Wasserstoff messen, sodass die Durchflussmenge eines H₂-Flusses ermittelt werden kann. Über einen Temperatursensor kann ebenfalls der H₂-Fluss überwacht werden, da sich die Temperatur durch den hohen Druckunterschied zwischen dem H₂-Tank (Wasserstofftank) der H₂-Tankstelle und dem zu befüllen H₂-Fahrzeugtank (Wasserstofffahrzeugtank) mit zunehmendem Gasfluss erniedrigt. Über die Anordnung des weiteren Sensors können so insbesondere mögliche Verluste des Übertragungsweges mitberücksichtigt werden.

Im Rahmen einer konstruktiv einfachen Implementierung des gegenständlichen Systems kann erfindungsgemäß vorteilhafter Weise vorgesehen sein, dass der weitere Sensor im Zapfventil der H₂-Tankstelle angeordnet ist. Im Rahmen einer solchen Ausführung muss für die Anordnung eines weiteren Sensors nur das Zapfventil adaptiert werden, was keine größeren Anpassungen erforderlich macht. Vorteilhafterweise befindet sich der weitere Sensor in dieser Ausführungsform direkt am sogenannten Abgabepunkt des Wasserstoffs der H₂-Tankstelle. Alternativ kann der weitere Sensor auch in dem Gasschlauch angeordnet sein.

Im Rahmen einer autark und selbstständig agierenden Ausführung einer H₂-Tankstelle kann erfindungsgemäß ferner vorgesehen sein, dass der weitere Sensor in der Zapfsäule der H₂-Tankstelle angeordnet ist, wobei der weitere Sensor vorzugsweise eine innerhalb des Gasschlauches angeordnete Messleitung zur Ermittlung des Zustandes des Gasschlauches aufweist. Mit Hilfe der Messeleitung kann ein Zustand des Gasschlauches durch den weiteren Sensor ermittelt werden. Zusätzlich kann der weitere Sensor unter Verwendung der Messeleitung indirekt eine Information über einen aktuell zu einem Fahrzeug fließenden H₂-Fluss ermitteln. Vorteilhaft an dieser Ausführung ist insbesondere die räumliche Nähe zwischen dem Steuergerät (bzw. dem Gaszähler) und dem weiteren Sensor, was insbesondere eine einfache Implementierung einer Kommunikationsverbindung zwischen den Komponenten ermöglicht.

Im Hinblick auf eine möglichst geringe Veränderung der H₂-Tankstelle des gegenständlichen Systems ist es ebenfalls denkbar, dass das System zusätzlich ein wasserstoffbetriebenes Fahrzeug umfasst, wobei der weitere Sensor in dem wasserstoffbetriebenen Fahrzeug, vorzugsweise unmittelbar an einer Zuführleitung eines Wasserstofffahrzeugtanks des wasserstoffbetriebenen Fahrzeugs angeordnet ist. Auf diese Weise ist lediglich eine Anpassung des Systems hinsichtlich des Datenaustauschs aus dem ersten und dem weiteren Sensor notwendig.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Hierbei können die in den Ansprüchen und in der Beschreibung erwähnten Merkmale jeweils einzeln für sich oder in beliebiger Kombination erfindungswesentlich sein.

Es zeigen:
- Fig. 1: eine schematische Darstellung der einzelnen Schritte eines erfindungsgemäßen Verfahrens zur Ermittlung einer bei einem Tankvorgang an einer H₂-Tankstelle an ein wasserstoffbetriebenes Fahrzeug tatsächlich abgegebenen Menge an Wasserstoff gemäß einem ersten Ausführungsbeispiel,
- Fig. 2: eine schematische Darstellung eines erfindungsgemäßen Systems zur Durchführung eines Verfahrens zur Ermittlung einer bei einem Tankvorgang an einer H₂-Tankstelle an ein wasserstoffbetriebenes Fahrzeug tatsächlich abgegebenen Menge an Wasserstoff gemäß einem ersten Ausführungsbeispiel,
- Fig. 3: eine schematische Darstellung des erfindungsgemäßen Systems aus Fig. 2 gemäß einem zweiten Ausführungsbeispiel,
- Fig. 4: eine schematische Darstellung des Systems aus Fig. 2 gemäß einem dritten Ausführungsbeispiel,
- Fig. 5: eine schematische Darstellung einer erfindungsgemäßen Nachschlagetabelle zur Verwendung für eine Ermittlung der tatsächlich abgegebenen Menge an Wasserstoff auf Basis einer Korrelation der mittels eines ersten und eines weiteren Sensors bestimmten Mengen an Wasserstoff.

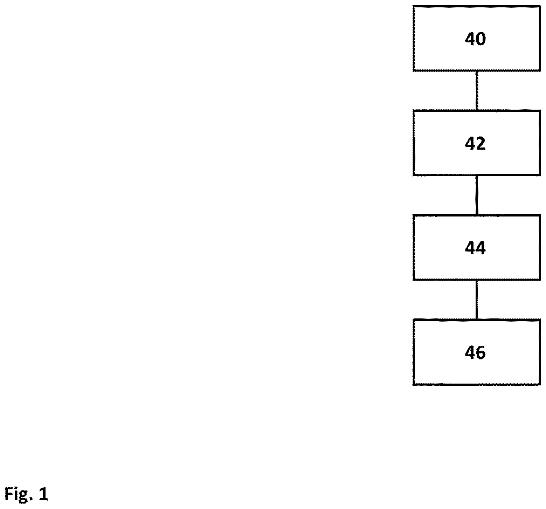

Fig. 1 zeigt eine schematische Darstellung der einzelnen Schritte eines erfindungsgemäßen Verfahrens zur Ermittlung einer bei einem Tankvorgang an einer H₂-Tankstelle 4 an ein wasserstoffbetriebenes Fahrzeug 22 tatsächlich abgegebenen Menge an Wasserstoff 20.

Hierbei umfasst das Verfahren gemäß Fig. 1 die Schritte eines Einleitens 40 eines Tankvorgangs des wasserstoffbetriebenen Fahrzeugs 22 mittels eines Steuergerätes 14 der H₂-Tankstelle 4, eines Erfassens 42 von zumindest einem Messwert zur Bestimmung einer während des Tankvorgangs abgegebenen Menge an Wasserstoff 20 mittels eines an einer ersten Position innerhalb der H₂-Tankstelle 4 angeordneten ersten Sensors 12, eines Erfassens 44 von zumindest einem Messwert zur Bestimmung einer während des Tankvorgangs abgegebenen Menge an Wasserstoff 20 mittels eines weiteren Sensors 18 an einer zweiten von der ersten verschiedenen Position sowie eines Ermittelns 46 der tatsächlich an das wasserstoffbetriebene Fahrzeug 22 abgegebenen Menge an Wasserstoff 20 auf Basis einer Korrelation der mittels des ersten Sensors 12 und der mittels des weiteren Sensors 18 bestimmten Menge an Wasserstoff 20.

Das Ermitteln 46 der tatsächlich abgegebenen Menge an Wasserstoff 20 auf Basis einer Korrelation der mittels des ersten Sensors 12 und der mittels des weiteren Sensors 18 bestimmten Menge an Wasserstoff 20 kann hierbei insbesondere über die Verwendung einer Nachschlagetabelle 32 erfolgen, die jeweils Datentupel aus zumindest einem mittels des ersten Sensors 12 und zumindest einem mittels des weiteren Sensors 18 erfassten Messwert für eine abgegebene Menge an Wasserstoff 20 umfasst und diesen Messwerten jeweils einen Wert zuordnet, der die tatsächliche an ein wasserstoffbetriebenes Fahrzeug 22 abgegebene Menge an Wasserstoff 20 angibt.

Der zumindest eine mittels des ersten Sensors 12 und der zumindest eine mittels des weiteren Sensors 18 erfasste Messwert zur Bestimmung einer abgegebenen Menge an Wasserstoff 20 kann hierbei im Rahmen einer möglichst fehlerfreien und zuverlässigen Ermittlung einer tatsächlich an ein wasserstoffbetriebenes Fahrzeug 22 abgegebenen Menge an Wasserstoff 20 vorteilhafter Weise in einem definierten Zeitintervall, vorzugsweise in einem zeitlich synchronisierten Zeitintervall erfasst werden.

Hierbei kann eine zeitliche Synchronisation zwischen dem ersten 12 und dem weiteren Sensor 18 beispielsweise durch die Implementierung von zeitgestempelten Messwerten und/oder die Einführung einer echtzeitfähigen Kommunikationsverbindung und/oder über die Versendung einer Zeitkorrelationsnachricht oder dergleichen erfolgen.

Ebenfalls möglich und insbesondere einfach implementierbar ist eine Ausführung in der die von dem weiteren Sensor 18 erfassten Messwerte zur Bestimmung einer abgegebenen Menge an Wasserstoff 20 vor einer Korrelation mit dem zumindest einen vom ersten Sensor 12 erfassten Messwert gemittelt werden, wobei hierbei vorzugsweise ein gleitender Mittelwert berechnet werden kann.

Im Hinblick auf eine konstruktiv einfache und unkomplizierte Art und Weise der Gewährleistung einer Kommunikation des weiteren Sensors 18 mit der H₂-Tankstelle 4 kann hierbei ferner vorgesehen sein, dass die Kommunikation über eine drahtlose Netzwerkverbindung, beispielsweise eine Bluetooth-Verbindung, eine WLAN-Verbindung, oder eine Verbindung über NFC oder Zigbee oder dergleichen erfolgt.

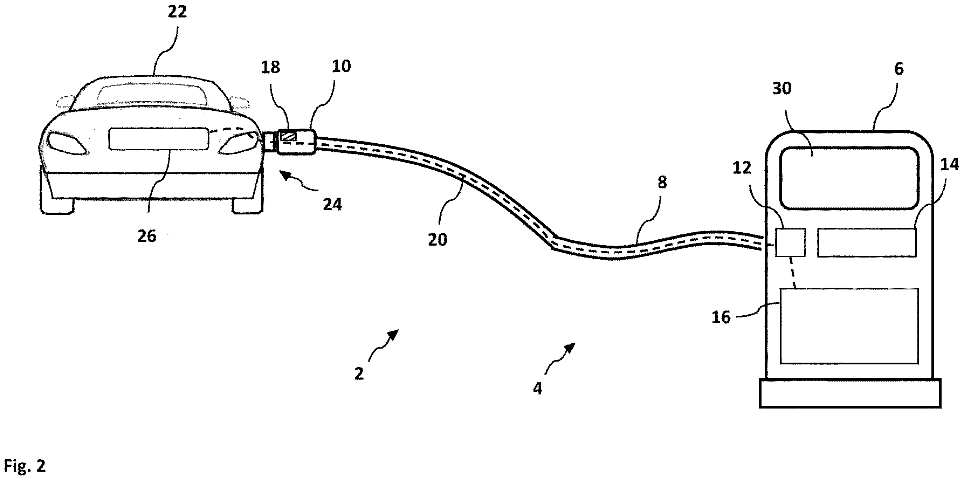

Fig. 2 zeigt eine schematische Darstellung eines erfindungsgemäßen Systems 2 zur Durchführung eines Verfahrens zur Ermittlung einer bei einem Tankvorgang an einer H₂-Tankstelle 4 an ein wasserstoffbetriebenes Fahrzeug 22 tatsächlich abgegebenen Menge an Wasserstoff 20 gemäß einem ersten Ausführungsbeispiel.

Hierbei umfasst das gegenständliche System 2, eine H₂-Tankstelle 4, mit einer Zapfsäule 6 und einem Gasschlauch 8 zur Überführung von Wasserstoff 20 zu einer Tanköffnung 24 eines wasserstoffbetriebenen Fahrzeugs 22. Der Gasschlauch 8 weist hierbei ein Zapfventil 10 zur Kopplung des Gasschlauches 8 mit der Tanköffnung 24 des wasserstoffbetriebenen Fahrzeugs 22 auf. Die Zapfsäule 6 der H₂-Tankstelle 4 umfasst ferner ein Steuergerät 14 zur Initiierung, Beendigung und Überwachung eines Tankvorgangs, einen Wasserstofffahrzeugtank 26 zur Speicherung von Wasserstoff 20 und einen ersten Sensor 12 zur Erfassung 42 von zumindest einem Messwert zur Bestimmung einer während eines Tankvorgangs abgegebenen Menge an Wasserstoff 20. Zudem umfasst das gegenständliche System 2 einen weiteren entfernt von dem ersten Sensor 12 angeordneten Sensor 18 zur Erfassung 44 von zumindest einem Messwert zur Bestimmung einer während eines Tankvorgangs abgegebenen Menge an Wasserstoff 20, wobei auf Basis einer Korrelation der mittels des ersten Sensors 12 und der mittels des weiteren Sensors 18 bestimmten Mengen an Wasserstoff 20 eine tatsächlich an das wasserstoffbetriebene Fahrzeug 22 abgegebene Menge an Wasserstoff 20 ermittelbar ist.

Der erste Sensor 12 kann hierbei insbesondere in Form eines Gaszählers ausgebildet sein, wie er in üblichen Gasversorgungsvorrichtungen integriert ist. Über einen Display 30 der H₂-Tankstelle 4 kann einem Nutzer beispielsweise ein ermittelter Wert für eine abgegebene Menge an Wasserstoff angezeigt werden.

Der zweite Sensor 18, der gemäß dem Ausführungsbeispiel aus Fig. 2 in dem Zapfventil 10 des Gasschlauchs 8 angeordnet ist, kann beispielsweise in Form eines Durchflussmessers, eines Drucksensors oder eines Temperatursensors oder dergleichen ausgebildet sein.

Die gemäß Fig. 2 verfolgte Ausführungsform einer Anordnung des weiteren Sensors 18 im Zapfventil 10 des Gasschlauchs 8 bietet sich hierbei insbesondere hinsichtlich einer konstruktiv einfachen Implementierung an, die keine größeren Anpassungen an der gegenständlichen H₂-Tankstelle 4 erfordert.

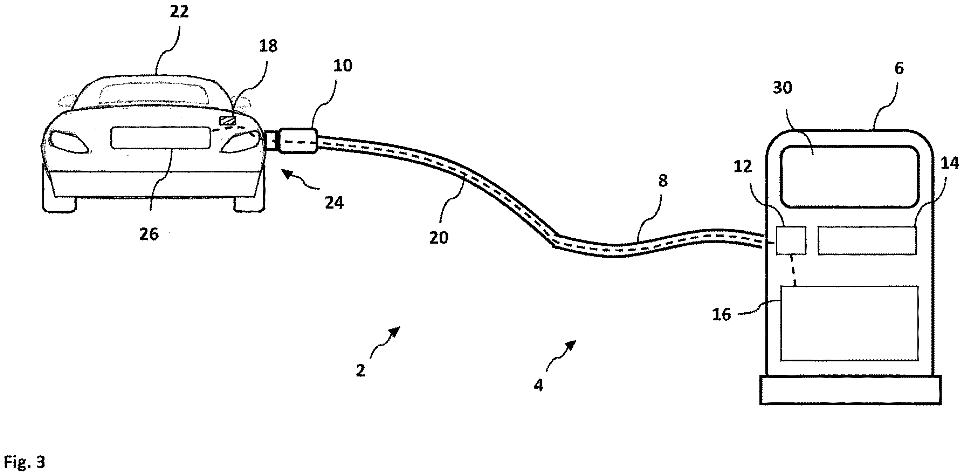

Fig. 3 zeigt eine schematische Darstellung eines erfindungsgemäßen Systems 2 gemäß einem zweiten Ausführungsbeispiel.

Gemäß diesem zweiten Ausführungsbeispiel ist der weitere Sensor 18 in dem wasserstoffbetriebenen Fahrzeug 22, insbesondere in der Nähe des Wasserstofffahrzeugtanks 26 angeordnet. Ein Vorteil dieser Ausführungsform ist es, dass die H₂-Tankstelle 4 selbst keinen weiteren Sensor 18 umfassen muss. Für eine Ausführung in dieser Form der Erfindung ist es allerdings erforderlich, dass ein wasserstoffbetriebenes Fahrzeug 22 auch mit einem weiteren Sensor 18 ausgestattet ist. Zusätzlich muss der weitere Sensor 18 auch seitens der H₂-Tankstelle 4 auslesbar sein, was beispielsweise über eine drahtlose oder drahtgebundene Kommunikationsverbindung mit dem Steuergerät 14 oder dem ersten Sensor 12 erfolgen kann.

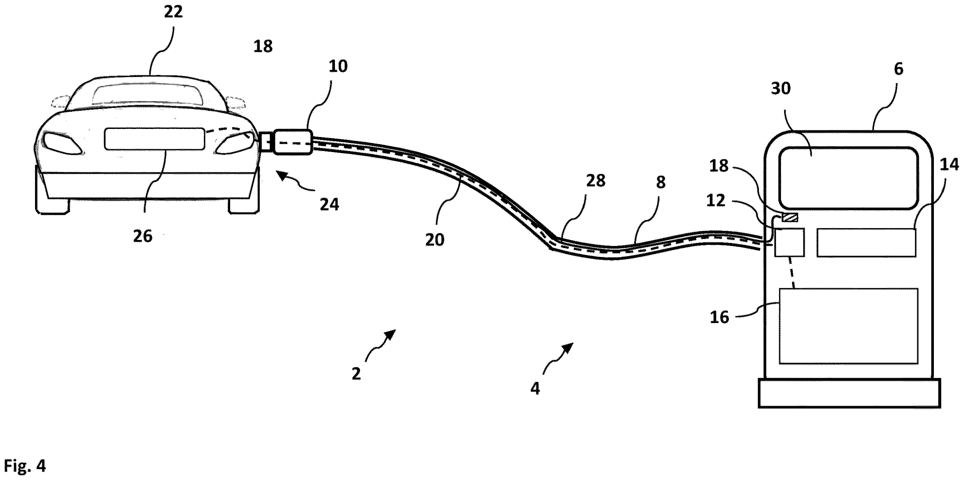

Fig. 4 zeigt eine schematische Darstellung eines erfindungsgemäßen Systems 2 gemäß einem dritten Ausführungsbeispiel.

Gemäß diesem dritten Ausführungsbeispiel befindet sich der weitere Sensor 18 innerhalb der Zapfsäule 6, benachbart zum ersten Sensor 12, wobei an den weiteren Sensor 18 eine Messleitung 28 angeschlossen ist, die sich über den Gasschlauch 8 erstreckt. Mit Hilfe der Messeleitung 28 können nicht nur Messwerte zur Bestimmung einer abgegebenen Menge an Wasserstoff 20 erfasst werden, sondern auch ein aktueller Zustand des Gasschlauchs 8 überwacht werden. Durch die räumliche Nähe des weiteren Sensors 18 zu dem ersten Sensor 12 bzw. dem Steuergerät 14 ist eine Kommunikationsverbindung besonders einfach zu implementieren.

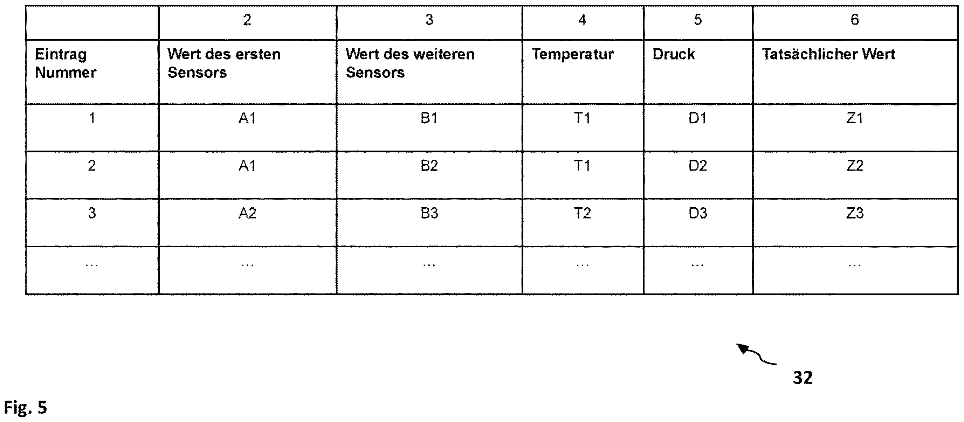

Fig. 5 zeigt eine schematische Darstellung einer erfindungsgemäßen Nachschlagetabelle 32 zur Verwendung für eine Ermittlung der tatsächlich abgegebenen Menge an Wasserstoff 20 auf Basis einer Korrelation der mittels des ersten Sensors 12 und der mittels des weiteren Sensors 18 bestimmten Mengen an Wasserstoff 20.

Wie gemäß der Nachschlagetabelle 32 in Fig. 5 erkennbar ist, wird ein erstes Datentupel aus einem bestimmten (Mess-)Wert (A1) des ersten Sensors (12), einem bestimmten (Mess-)Wert (B1) des weiteren Sensors 18 sowie einem Wert für die Temperatur (T1) und einem Wert für den Druck (D1) gebildet, dem ein tatsächlicher Wert (Z1) zugeordnet ist. Entsprechend wird einem zweiten Datentupel ein bestimmter (Mess-)Wert (A1) des ersten Sensors 12, ein bestimmter (Mess-)Wert (B2) des weiteren Sensors 18, ein Wert der Temperatur (T1) und ein Wert für den Druck (D2), ein tatsächlicher Wert (Z2) zugeordnet.

Eine derartige Nachschlagetabelle 32 kann hierbei insbesondere auf Basis einer Kalibrierung bei der Inbetriebnahme und/oder Eichung und/oder der Produktion der H₂-Tankstelle 4 erstellt werden und beispielsweise in dem ersten Sensor 12 oder dem Steuergerät 14 abgespeichert werden.

Die Nachschlagetabelle 32 weist hierbei insbesondere eine Vielzahl, zumindest fünf, vorzugsweise zumindest zehn, insbesondere zumindest 25 verschiedene Datentupel auf.

Neben den zusätzlich aufgeführten Werten einer Temperatur und einem Druck können selbstverständlich auch noch andere systemrelevante Parameter in die Nachschlagetabelle 32 integriert werden.

Mittels des erfindungsgemäßen Verfahrens und des erfindungsgemäßen Systems 2 ist es insbesondere möglich, durch die erfindungsgemäße Korrelation der mittels eines ersten Sensors 12 und der mittels eines weiteren Sensors 18 bestimmten Mengen an Wasserstoff 20, eine eichrechtskonforme Ermittlung einer bei einem Tankvorgang an einer H₂-Tankstelle 4 an ein wasserstoffbetriebenes Fahrzeug 22 tatsächlich abgegebenen Menge an Wasserstoff 20 durchzuführen, wobei insbesondere auch Übertragungsverluste bzw. Leitungsverluste berücksichtigt werden.

### Bezugszeichenliste

- 2: System zur Ermittlung einer tatsächlich abgegebenen Menge an Wasserstoff
- 4: H₂-Tankstelle
- 6: Zapfsäule
- 8: Gasschlauch
- 10: Zapfventil
- 12: erster Sensor
- 14: Steuergerät
- 16: Wasserstofftank
- 18: weiterer Sensor
- 20: Wasserstoff
- 22: wasserstoffbetriebenes Fahrzeug
- 24: Tanköffnung
- 26: Wasserstofffahrzeugtank
- 28: Messleitung
- 30: Display
- 32: Nachschlagetabelle

- 40: Einleiten eines Tankvorgangs
- 42: Erfassen von zumindest einem Messwert zur Bestimmung einer Menge an Wasserstoff mittels eines ersten Sensors
- 44: Erfassen von zumindest einem Messwert zur Bestimmung einer Menge an Wasserstoff mittels eines weiteren Sensors
- 46: Ermitteln einer tatsächlich abgegebenen Menge an Wasserstoff

## Patentansprüche

1. Verfahren zur Ermittlung einer bei einem Tankvorgang an einer H₂-Tankstelle (4) an ein wasserstoffbetriebenes Fahrzeug (22) tatsächlich abgegebenen Menge an Wasserstoff (20), umfassend die Schritte:
- Einleiten (40) eines Tankvorgangs des wasserstoffbetriebenen Fahrzeugs (22) mittels eines Steuergerätes (14) der H₂-Tankstelle (4),
- Erfassen (42) von zumindest einem Messwert zur Bestimmung einer während des Tankvorgangs abgegebenen Menge an Wasserstoff (20) mittels eines an einer ersten Position innerhalb der H₂-Tankstelle (4) angeordneten ersten Sensors (12),
- Erfassen (44) von zumindest einem Messwert zur Bestimmung einer während des Tankvorgangs abgegebenen Menge an Wasserstoff (20) mittels eines weiteren Sensors (18) an einer zweiten, von der ersten verschiedenen Position,
- Ermitteln (46) der tatsächlich an das wasserstoffbetriebene Fahrzeug (22) abgegebenen Menge an Wasserstoff (20) auf Basis einer Korrelation der mittels des ersten Sensors (12) und der mittels des weiteren Sensors (18) bestimmten Mengen an Wasserstoff (20),
**dadurch gekennzeichnet dass**
das Ermitteln (46) der tatsächlich abgegebenen Menge an Wasserstoff (20) auf Basis einer Korrelation der mittels des ersten Sensors (12) und der mittels des weiteren Sensors (18) bestimmten Mengen an Wasserstoff (20) über die Verwendung einer Nachschlagetabelle (32) erfolgt, wobei die Nachschlagetabelle (32) ein Datentupel aus zumindest einem mittels des ersten Sensors (12) erfassten Messwert und einem mittels des weiteren Sensors (18) erfassten Messwert für eine abgegebene Menge an Wasserstoff umfasst, wobei den mittels des ersten und weiteren Sensors (12, 18) erfassten Messwerten jeweils ein Messwert zugeordnet ist, der die tatsächliche an ein wasserstoffbetriebenes Fahrzeug (22) abgegebene Menge an Wasserstoff (20) angibt.

2. Verfahren nach Anspruch 1,
**dadurch gekennzeichnet,**
**dass** die Nachschlagetabelle (32) auf Basis einer Kalibrierung bei der Inbetriebnahme und/oder einer Eichung und/oder der Produktion der H₂-Tankstelle (4) erstellt wurde, wobei die Nachschlagetabelle (32) vorzugsweise in einer Komponente der H₂-Tankstelle (4), insbesondere in dem ersten Sensor (12) oder dem Steuergerät (14) abgespeichert ist.

3. Verfahren nach einem der vorangehenden Ansprüche,
**dadurch gekennzeichnet,**
**dass** die Nachschlagetabelle (32) zumindest fünf, vorzugsweise zumindest zehn, insbesondere zumindest 25 verschiedene Datentupel aus zumindest einem mittels des ersten Sensors (12) erfassten Messwert und zumindest einem mittels des weiteren Sensors (18) erfassten Messwert einer abgegebenen Menge an Wasserstoff umfasst, denen jeweils ein Wert zugeordnet ist, der die tatsächlich an ein wasserstoffbetriebenes Fahrzeug (22) abgegebene Menge an Wasserstoff (20) angibt.

4. Verfahren nach einem der vorangehenden Ansprüche
**dadurch gekennzeichnet,**
**dass** ein Datentupel der Nachschlagetabelle (32) neben einem mittels des ersten Sensors (12) erfassten Messwert und einem mittels des weiteren Sensors (18) erfassten Messwert einer abgegebenen Menge an Wasserstoff (20) noch zumindest einen weiteren Wert, vorzugsweise mehr als zumindest einen weiteren Wert umfasst, denen jeweils ein Wert zugeordnet ist, der die tatsächlich an ein wasserstoffbetriebenes Fahrzeug (22) abgegebene Menge an Wasserstoff (20) angibt, wobei der zumindest eine weitere Wert ein Druck und/oder eine Temperatur und/oder ein Gasfluss ist.

5. Verfahren nach einem der vorangehenden Ansprüche,
**dadurch gekennzeichnet,**
**dass** der zumindest eine mittels des ersten Sensors (12) erfasste Messwert und der zumindest eine mittels des weiteren Sensors (18) erfasste Messwert zur Bestimmung einer abgegebenen Menge an Wasserstoff (20) in einem definierten Zeitintervall, vorzugsweise in einem zeitlich synchronisierten Zeitintervall, erfasst werden.

6. Verfahren nach einem der vorangehenden Ansprüche,
**dadurch gekennzeichnet,**
**dass** eine zeitliche Synchronisation zwischen dem ersten und dem weiteren Sensor (12, 18) durch die Implementierung von zeitgestempelten Messwerten und/oder die Einführung einer echtzeitfähigen Kommunikationsverbindung und/oder über die Versendung einer Zeitkorrelationsnachricht erfolgt.

7. Verfahren nach einem der vorangehenden Ansprüche,
**dadurch gekennzeichnet,**
**dass** die von dem weiteren Sensor (18) erfassten Messwerte zur Bestimmung einer abgegebenen Menge an Wasserstoff (20) vor einer Korrelation mit dem zumindest einen vom ersten Sensor (12) erfassten Messwert gemittelt werden, wobei vorzugsweise ein gleitender Mittelwert berechnet wird.

8. Verfahren nach einem der vorangehenden Ansprüche,
**dadurch gekennzeichnet,**
**dass** eine Kommunikation des weiteren Sensors (18) mit der H₂-Tankstelle (4) zur Übermittlung der erfassten Messwerte, vorzugsweise mit dem ersten Sensor (12) und/oder des Steuergeräts (14), über eine Drahtlosnetzwerkverbindung erfolgt, wobei die Drahtlosnetzwerkverbindung insbesondere als Bluetooth-Verbindung, WLAN-Verbindung, NFC oder Zigbee implementiert ist.

9. System (2) zur Durchführung eines Verfahrens nach einem der vorangehenden Ansprüche, umfassend:
- eine H₂-Tankstelle (4), mit
- einem Wasserstofftank (16) zur Speicherung von Wasserstoff (20),
- einer Zapfsäule (6) und
- einem Gasschlauch (8) zur Überführung von Wasserstoff (20) zu einer Tanköffnung (24) eines wasserstoffbetriebenen Fahrzeugs (22) mit einem Zapfventil (10) zur Kopplung des Gasschlauchs (8) mit der Tanköffnung (24) des wasserstoffbetriebenen Fahrzeugs (22),
- wobei die Zapfsäule (6) ein Steuergerät (14) zur Initiierung, Beendigung und Überwachung eines Tankvorgangs und einen ersten Sensor (12) zur Erfassung (42) von zumindest einem Messwert zur Bestimmung einer während eines Tankvorgangs abgegebenen Menge an Wasserstoff (20) aufweist,
- einen weiteren entfernt von dem ersten Sensor (12) angeordneten Sensor (18) zur Erfassung (44) von zumindest einem Messwert zur Bestimmung einer während eines Tankvorgangs abgegebenen Menge an Wasserstoff (20),
- wobei auf Basis einer Korrelation der mittels des ersten Sensors (12) und der mittels des weiteren Sensors (18) bestimmten Mengen an Wasserstoff (20) eine tatsächlich an das wasserstoffbetriebene Fahrzeug (22) abgegebenen Menge an Wasserstoff (20) ermittelbar ist.

10. System nach Anspruch 9,
**dadurch gekennzeichnet,**
**dass** der erste Sensor (12) in Form eines Gaszählers ausgebildet ist, wobei der Gaszähler eine Zählereinheit und eine Messeinheit umfasst, wobei die Zählereinheit und die Messeinheit vorzugsweise örtlich getrennt voneinander angeordnet sind.

11. System nach Anspruch 9 oder 10,
**dadurch gekennzeichnet,**
**dass** der zweite Sensor (18) in Form eines Durchflussmessers, eines Drucksensors oder eines Temperatursensors gebildet ist.

12. System nach einem der Ansprüche 9 bis 11,
**dadurch gekennzeichnet,**
**dass** der weitere Sensor (18) im Zapfventil (10) der H₂-Tankstelle (4) angeordnet ist.

13. System nach einem der Ansprüche 9 bis 12,
**dadurch gekennzeichnet,**
**dass** der weitere Sensor (18) in der Zapfsäule (6) der H₂-Tankstelle (4) angeordnet ist, wobei der weitere Sensor (18) vorzugsweise eine innerhalb des Gasschlauchs (8) angeordnete Messleitung (28) zur Ermittlung des Zustandes des Gasschlauchs (8) aufweist.

14. System nach einem der Ansprüche 9 bis 13,
**dadurch gekennzeichnet,**
**dass** das System zusätzlich ein wasserstoffbetriebenes Fahrzeug (22) umfasst, wobei der weitere Sensor (18) in dem wasserstoffbetriebenen Fahrzeug (22), vorzugsweise unmittelbar an einer Zuführleitung eines Wasserstofffahrzeugtanks (26) des wasserstoffbetriebenen Fahrzeugs (22) angeordnet ist.

## Claims

1. Method for determining the amount of fuel required during a refueling process at an H₂-Filling station (4) to a hydrogen-powered vehicle (22), comprising the steps of:
- initiating (40) a refueling process of the hydrogen-powered vehicle (22) by means of a control unit (14) of the H₂-Filling station (4),
- detecting (42) at least one measured value for determining a quantity of hydrogen (20) dispensed during the refueling process by means of a first sensor (12) at a first position within the H₂-Filling station (4),
- detecting (44) at least one measured value for determining a quantity of hydrogen (20) dispensed during the refueling process by means of a further sensor (18) at a second position different from the first,
- determining (46) the amount of hydrogen (20) actually delivered to the hydrogen-powered vehicle (22) on the basis of a correlation of the amounts of hydrogen (20) determined by means of the first sensor (12) and the amounts of hydrogen (20) determined by means of the further sensor (18),
**characterized in that**
determining (46) of the actual quantity of hydrogen (20) dispensed is carried out on the basis of a correlation of the quantities of hydrogen (20) determined by means of the first sensor (12) and the quantities of hydrogen (20) determined by means of the further sensor (18) via the use of a look-up table (32), wherein the look-up table (32) comprises a data tuple of at least one measured value recorded by means of the first sensor (12) and a measured value for a delivered quantity of hydrogen recorded by means of the further sensor (18), wherein the measured values recorded by means of the first and further sensors (12, 18) are each assigned a measured value which indicates the actual quantity of hydrogen (20) delivered to a hydrogen-powered vehicle (22).

2. Method according to claim 1,
**characterized in that**
the look-up table (32) is calculated on the basis of a calibration during commissioning and/or calibration and/or production of the H₂-Filling station (4), wherein the look-up table (32) was preferably created in a component of the H₂Filling station (4), in particular in the first sensor (12) or the control unit (14).

3. Method according to any one of the preceding claims,
**characterized in that**
the look-up table (32) comprises at least five, preferably at least ten, in particular at least 25 different data tuples from at least one measured value recorded by means of the first sensor (12) and at least one measured value of a delivered quantity of hydrogen recorded by means of the further sensor (18), to each of which a value is assigned which indicates the quantity of hydrogen (20) actually delivered to a hydrogen-powered vehicle (22).

4. Method according to one of the preceding claims
**characterized in that**
a data tuple of the look-up table (32) comprises, in addition to a measured value recorded by means of the first sensor (12) and a measured value of a delivered quantity of hydrogen (20) recorded by means of the further sensor (18), at least one further value, preferably more than at least one further value, to each of which a value is assigned which indicates the quantity of hydrogen (20) actually delivered to a hydrogen-powered vehicle (22), the at least one further value being a pressure and/or a temperature and/or a gas flow.

5. Method according to any one of the preceding claims,
**characterized in that**
the at least one measured value detected by means of the first sensor (12) and the at least one measured value detected by means of the further sensor (18) for determining a released quantity of hydrogen (20) are detected in a defined time interval, preferably in a time-synchronized time interval.

6. Method according to any one of the preceding claims,
**characterized in that**
a time synchronization between the first and the further sensor (12, 18) takes place by implementing time-stamped measured values and/or by introducing a real-time capable communication link and/or by sending a time correlation message.

7. Method according to any one of the preceding claims,
**characterized in that**
the measured values recorded by the further sensor (18) for determining a released quantity of hydrogen (20) are averaged before correlation with the at least one measured value recorded by the first sensor (12), wherein preferably a moving average value is calculated.

8. Method according to any one of the preceding claims,
**characterized in that**
communication of the additional sensor (18) with the H₂-Filling station (4) for transmitting the measured values detected, preferably with the first sensor (12) and/or the control unit (14), is carried out via a wireless network connection, the wireless network connection being implemented in particular as a Bluetooth connection, WLAN connection, NFC or Zigbee.

9. A system (2) for carrying out a method according to any one of the preceding claims, comprising:
- a H₂-Filling station (4), with
- a hydrogen tank (16) for storing hydrogen (20),
- a fuel dispenser (6) and
- a gas hose (8) for transferring hydrogen (20) to a tank opening (24) of a hydrogen-powered vehicle (22) with a nozzle (10) for coupling the gas hose (8) to the tank opening (24) of the hydrogen-powered vehicle (22),
- wherein the fuel dispenser (6) has a control unit (14) for initiating, terminating and monitoring a refueling process and a first sensor (12) for detecting (42) at least one measured value for determining a quantity of hydrogen (20) dispensed during a refueling process,
- a further sensor (18) arranged remotely from the first sensor (12) for detecting (44) at least one measured value for determining an amount of hydrogen (20) dispensed during a refueling process,
- wherein a quantity of hydrogen (20) actually delivered to the hydrogen-powered vehicle (22) can be determined on the basis of a correlation of the quantities of hydrogen (20) determined by means of the first sensor (12) and the quantities of hydrogen (20) determined by means of the further sensor (18).

10. System according to claim 9,
**characterized in that**
the first sensor (12) is in the form of a gas meter, the gas meter comprising a counter unit and a measuring unit, the counter unit and the measuring unit preferably being arranged separately from one another.

11. System according to claim 9 or 10,
**characterized in that**
the second sensor (18) is in the form of a flow meter, a pressure sensor or a temperature sensor.

12. System according to any one of claims 9 to 11,
**characterized in that**
the further sensor (18) is placed in the dispensing valve (10) of the H₂-Filling station (4).

13. System according to any one of claims 9 to 12,
**characterized in that**
the further sensor (18) is placed in the fuel dispenser (6) of the H₂-Filling station (4), the further sensor (18) preferably having a measuring line (28) arranged inside the gas hose (8) for determining the state of the gas hose (8).

14. System according to any one of claims 9 to 13,
**characterized in that**
the system additionally comprises a hydrogen-powered vehicle (22), the further sensor (18) being arranged in the hydrogen-powered vehicle (22), preferably directly on a supply line of a hydrogen vehicle tank (26) of the hydrogen-powered vehicle (22).

## Revendications

1. Procédé pour déterminer une quantité d'hydrogène (20) qui est effectivement délivrée à un véhicule à hydrogène (22) pendant une opération de ravitaillement dans une station-service (4) d'hydrogène, comprenant les étapes suivantes :
- Lancement (40) d'une opération de ravitaillement du véhicule à hydrogène (22) au moyen d'un appareil de commande (14) de la station-service (4) d'hydrogène,
- L'acquisition (42) d'au moins une valeur de mesure pour déterminer une quantité d'hydrogène (20) distribuée pendant l'opération de ravitaillement au moyen d'un capteur (12) à une première position à l'intérieur de la station-service (4) d'hydrogène,
- L'acquisition (44) d'au moins une valeur de mesure pour la détermination d'une quantité d'hydrogène (20) délivrée pendant la opération de ravitaillement au moyen d'un autre capteur (18) à une deuxième position différente de la première position,
- Déterminer (46) la quantité d'hydrogène (20) réellement délivrée au véhicule à hydrogène (22) sur la base d'une corrélation des quantités d'hydrogène (20) déterminées au moyen du premier capteur (12) et des quantités déterminées au moyen de l'autre capteur (18),
**caractérisé en ce que**
la détermination (46) de la quantité d'hydrogène (20) effectivement distribuée s'effectue sur la base d'une corrélation des quantités d'hydrogène (20) déterminées au moyen du premier capteur (12) et des quantités d'hydrogène (20) déterminées au moyen de l'autre capteur (18) par l'intermédiaire de l'utilisation d'une table de consultation (32), la table de consultation (32) comprenant un duplex de données constitué d'au moins une valeur de mesure saisie au moyen du premier capteur (12) et d'une valeur de mesure saisie au moyen de l'autre capteur (18) pour une quantité d'hydrogène délivrée, une valeur de mesure indiquant la quantité réelle d'hydrogène (20) délivrée à un véhicule à hydrogène (22) étant associée à chacune des valeurs de mesure saisies au moyen du premier et de l'autre capteur (12, 18).

2. Procédé selon la revendication 1,
**caractérisé en ce que**
le tableau de consultation (32) est établi sur la base d'un étalonnage lors de la mise en service et/ou d'un étalonnage et/ou de la production de la station-service (4) d'hydrogène, le tableau de consultation (32) ayant été établi de préférence dans un composant de la station-service (4) d'hydrogène, en particulier dans le premier capteur (12) ou dans l'appareil de commande (14).

3. Procédé selon l'une quelconque des revendications précédentes,
**caractérisé en ce que**
le tableau de consultation (32) comprend au moins cinq, de préférence au moins dix, en particulier au moins 25 duplex de données différents constitués d'au moins une valeur de mesure enregistrée au moyen du premier capteur (12) et d'au moins une valeur de mesure d'une quantité d'hydrogène délivrée enregistrée au moyen de l'autre capteur (18), auxquels est associée à chaque fois une valeur qui indique la quantité d'hydrogène (20) effectivement délivrée à un véhicule à hydrogène (22).

4. Procédé selon l'une quelconque des revendications précédentes,
**caractérisé en ce qu'**
un duplex de données du tableau de consultation (32) comprend, en plus d'une valeur de mesure enregistrée au moyen du premier capteur (12) et d'une valeur de mesure d'une quantité d'hydrogène (20) délivrée enregistrée au moyen de l'autre capteur (18), au moins une autre valeur, de préférence plus d'au moins une autre valeur, auxquelles est associée respectivement une valeur qui indique la quantité d'hydrogène (20) effectivement délivrée à un véhicule à hydrogène (22), ladite au moins une autre valeur étant une pression et/ou une température et/ou un flux de gaz.

5. Procédé selon l'une quelconque des revendications précédentes,
**caractérisé en ce que**
l'au moins une valeur de mesure saisie au moyen du premier capteur (12) et l'au moins une valeur de mesure saisie au moyen de l'autre capteur (18) sont saisies pour déterminer une quantité d'hydrogène (20) délivrée dans un intervalle de temps défini, de préférence dans un intervalle de temps synchronisé dans le temps.

6. Procédé selon l'une quelconque des revendications précédentes,
**caractérisé en ce qu'**
une synchronisation temporelle entre le premier et l'autre capteur (12, 18) est effectuée par l'implémentation de valeurs de mesure horodatées et/ou par l'introduction d'une liaison de communication compatible avec le temps réel et/ou par l'envoi d'un message de corrélation temporelle.

7. Procédé selon l'une quelconque des revendications précédentes,
**caractérisé en ce que**
les valeurs de mesure saisies par l'autre capteur (18) sont moyennées pour déterminer une quantité d'hydrogène (20) délivrée avant une corrélation avec la au moins une valeur de mesure saisie par le premier capteur (12), une valeur moyenne mobile étant de préférence calculée.

8. Procédé selon l'une quelconque des revendications précédentes,
**caractérisé en ce qu'**
une communication de l'autre capteur (18) avec la station-service (4) d'hydrogène pour la transmission des valeurs de mesure saisies, de préférence avec le premier capteur (12) et/ou l'appareil de commande (14), s'effectue par l'intermédiaire d'une liaison de réseau sans fil, la liaison de réseau sans fil étant mise en oeuvre en particulier sous la forme d'une liaison Bluetooth, d'une liaison WLAN, NFC ou Zigbee.

9. Système (2) pour la mise en oeuvre d'un procédé selon l'une des revendications précédentes, comprenant :
- une station-service (4) d'hydrogène, avec
- un réservoir d'hydrogène (16) pour le stockage de l'hydrogène (20),
- un distributeur d'essence (6) et
- un tuyau de gaz (8) pour transférer de l'hydrogène (20) à une ouverture de réservoir (24) d'un véhicule à hydrogène (22), avec une soupape de distribution (10) pour coupler le tuyau de gaz (8) à l'ouverture de réservoir (24) du véhicule à hydrogène (22),
- le a distributeur d'essence (6) présentant un appareil de commande (14) pour initier, terminer et surveiller une opération de ravitaillement et un premier capteur (12) pour détecter (42) au moins une valeur de mesure pour déterminer une quantité d'hydrogène (20) délivrée pendant une opération de ravitaillement,
- un autre capteur (18) disposé à distance du premier capteur (12) pour l'acquisition (44) d'au moins une valeur de mesure pour déterminer une quantité d'hydrogène (20) distribuée pendant une opération de ravitaillement,
- dans lequel, sur la base d'une corrélation des quantités d'hydrogène (20) déterminées au moyen du premier capteur (12) et des quantités d'hydrogène (20) déterminées au moyen de l'autre capteur (18), une quantité d'hydrogène (20) effectivement délivrée au véhicule à hydrogène (22) peut être déterminée.

10. Système selon la revendication 9,
**caractérisé en ce que**
le premier capteur (12) est réalisé sous la forme d'un compteur de gaz, le compteur de gaz comprenant une unité de comptage et une unité de mesure, l'unité de comptage et l'unité de mesure étant de préférence disposées localement séparément l'une de l'autre.

11. Système selon la revendication 9 ou 10,
**caractérisé en ce que**
l'autre capteur (18) est formé sous la forme d'un débitmètre, d'un capteur de pression ou d'un capteur de température.

12. Système selon l'une quelconque des revendications 9 à 11,
**caractérisé en ce que**
l'autre capteur (18) est disposée dans la soupape de distribution (10) de la station-service (4) d'hydrogène.

13. Système selon l'une quelconque des revendications 9 à 12,
**caractérisé en ce que**
l'autre capteur (18) est disposée dans le distributeur d'essence (6) de la station-service (4) d'hydrogène, l'autre capteur (18) présentant de préférence une conduite de mesure (28) disposée à l'intérieur du tuyau de gaz (8) pour déterminer l'état du tuyau de gaz (8).

14. Système selon l'une quelconque des revendications 9 à 13,
**caractérisé en ce que**
le système comprend en outre un véhicule à hydrogène (22), l'autre capteur (18) étant disposé dans le véhicule à hydrogène (22), de préférence directement sur une conduite d'alimentation d'un réservoir (26) à hydrogène du véhicule à hydrogène (22).
